# EUROPEAN PATENT APPLICATION

(11) **EP 4 653 207 A1**
(43) Date of publication of application: **26.11.2025**
(21) Application number: 25178797.4
(22) Date of filing: 26.05.2025
(51) Int. Cl.: B60B 39/00, B60B 39/12, B62B 19/02

(54) **TRACTION DEVICE FOR WHEELED VEHICLES**

(30) Priority: 24.05.2024 SE 2450563
(71) Applicant: Svensk Vattenbarriär AB, 441 93 Alingsas (SE)
(72) Inventor: Svensson, Gerhard, Alingsås (SE)
(74) Representative: KIPA AB

(57) **Abstract**

A traction device (18) for wheeled vehicles comprises an elongated flexible belt (2). A plurality of holes is arranged in and along the flexible belt (2), wherein a bolt (21) is arranged in each hole with the bolt head on one side of the flexible belt (2) and wherein the bolt (21) is fixed to the flexible belt (2) with a nut on the opposite side of the flexible belt (2).

## Description

### TECHNICAL FIELD

The present invention relates to a traction device for wheeled vehicles. The traction device comprises an elongated flexible belt.

### TECHNICAL BACKGROUND

There are a variety of solutions for covering wheels with snow chains, snow socks, etc. to create traction on, for example, snowy/icy surfaces. Unfortunately, many of these solutions are difficult to mount onto wheels, particularly in situations when they need to be mounted while a vehicle is on a slippery slope.

EP2758255 B1 describes an anti-skid device that can be used reliably even on snow-covered and dirt roads. For this purpose, a vehicle anti-skid device is fitted with a support device and a plurality of moulded parts which can be guided by the support device along a direction of travel and which are connected to one another in a loop. The support device has diverting elements which divert the belt or chain. The support device may be attached to the vehicle so that when the vehicle is being driven, the moulded parts are pulled between a wheel of the vehicle and the ground. A housing is fastened to the support device and protects a section of the support device positioned at the front in the direction of travel, including the moulded parts placed there.

DE29800914 U1 describes a device with a belt/strap in a loop. The belt is moved and/or positioned so that it is permanently retained or being guided under a rolling vehicle wheel without the belt being connected to the vehicle wheel. The device may have multiple belts and consist of chains and/or other suitable materials. The unit can be used in both directions of travel and can be adapted to all wheel sizes. The unit is easy to mount near the vehicle wheels to help the driver move forward or backward in winter conditions, avoiding the need for additional snow chains.

### SUMMARY OF THE INVENTION

An object of the present invention is to provide an improved traction device for wheeled vehicles that can be used on, for example, slippery road surfaces or in sand.

This is achieved with a traction device according to the appended claims.

According to a first aspect of the present disclosure, a traction device for wheeled vehicles is described, which traction device comprises an elongated flexible belt. A plurality of holes is arranged in and along the flexible belt, wherein a bolt is arranged in each respective hole, with the bolt head on one side of the flexible belt and wherein the bolt is secured to the flexible belt by a nut on an opposite side of the flexible belt.

It has been shown that the said traction device has an improved grip compared to previously known belts, chains and straps.

Preferably, a washer is arranged on each side of the flexible belt at each respective bolt and nut. Suitably, the diameter of the washer is more than 1.5 times the size of the diagonal of the bolt head at its largest point.

Having a washer that is substantially larger than the bolt head reduces the risk of the traction device twisting when in use.

In a further preferred embodiment, the flexible belt comprises holes arranged in pairs on and along the flexible belt and elongated washers with two holes are arranged at corresponding distances as the pairs of holes in the flexible belt.

The said solution further reduces the risk of the traction device, or rather the flexible belt, twisting under the wheel.

A further improvement may be achieved by arranging said washers at an angle to the longitudinal direction of the flexible belt.

According to another aspect of the present disclosure, said holes or pairs of holes are arranged in two parallel rows in and along the flexible belt with associated bolts and nuts.

According to one aspect of the disclosure, a system is provided for wheeled vehicles in slippery road conditions, which system comprises a traction device. The traction device, as described above, is arranged in an endless elongated loop positioned around a guide element in such a manner that the loop reverses direction at the guide element. The guide element is arranged on a glide element which is configured to be pulled or pushed forward by a vehicle along the ground in front of one of the wheels of the vehicle such that one side of the loop is arranged to run beneath the wheel and the other side of the loop is arranged to run in an opposite direction back towards the guide element, alongside the wheel.

The traction device is thus continuously deployed in front of a wheel and as the wheel rolled over a part of the traction device, it is fed alongside of the wheel back in front of the wheel via the guide element, which forms one end of the elongated loop.

Preferably, the guide element is a guide wheel rotatably arranged on the glide element in such a way that the traction device runs around the guide wheel so that the loop lies in a horizontal plane when the system is in use. The diameter of the guide wheel is, in a preferred embodiment, at least equal to half the width of a tire. For use with a truck or bus, the diameter of the guide wheel should be approx. 20 cm.

Additionally, in some examples, the flexible belt is guided around a circumference of the guide element which thereby provides a rotation of the enless elongated loop, and wherein the loop formed by the flexible belt is maintained in a substantially horizontal plane with respect to the ground surface during operation of the system.

**In** order to prevent the glide element from getting caught on objects in the ground or digging into, for example, snow, the glide element preferably has an upwardly bent and/or curved front end.

A second guide element may preferably be arranged at the rear end of the glide element, configured to extend backward at least to a point or position where the wheel is in contact with the ground and alongside the wheel when in use. This second guide element is intended to prevent the portion of the belt advancing alongside of the tire from ending up under the tire.

According to one embodiment, the system comprises an elongated drawbar, which arranged to extend in a forward direction at the leading edge of the glide element. When the glide element is pulled forward by, for example, attaching a strap to the vehicle and connecting it to the system, it is advantageous that a drawbar is used which is fixedly connected to the glide element for attaching the strap at its front end to minimize the risk of the glide element starting to swing or pivot sideways.

According to another embodiment of the system, a first guide runner is arranged at the rear end of the glide element, configured to extend backward at least as far as where the wheel contacts the ground and alongside the wheel. A bridge element is arranged on the first guide runner so that it connects the first guide runner to a second guide runner arranged in parallel to the first guide runner so that the second guide runner extends backwards at least as far as where the wheel is in contact with the ground and on the opposite side of the wheel relative to the first guide runner.

This embodiment allows the vehicle's wheel to push the system without needing to be attached to the vehicle.

To reduce frictional heat, the bridge element includes an axle, such as a shaft, that is rotatably mounted at each of the first and second guide runners, transversely to the longitudinal direction of the guide runners. Thus, the axle may rotate when the vehicle's wheel is in contact with the axle.

**In** order to further reduce frictional heat between the vehicle's wheel and the bridge element, the bridge element, according to another embodiment, includes a wheel axle arranged at each of the first and second guide runners, transversely to the longitudinal direction of the guide runners, wherein a wheel is rotatably mounted on the wheel axle. The larger the wheel, the smaller the rotational speed, thereby minimizing the frictional heat generated by the rotation.

Preferably, the first guide runner is detachably arranged on the glide element. This is an advantage partly for transporting the system when not in use, but another advantage is that the second guide runner can be coupled to the glide element so that the system can be mounted to any side of the vehicle.

In a preferred embodiment of the present disclosure, the axle/wheel axle is slidably arranged at the bridge element in the longitudinal direction of the axle/wheel axle. In this way, it is possible to adjust the distance between the guide runners and thereby adapt the system to a width of a wheel.

In a variant of the invention, a return guard is provided on the glide element. In this way, the part of the loop next to the tire is protected and at the same time has improved control or guidance.

Preferably, the return guard is a pipe or tube.

According to an additional aspect of the present disclosure, the flexible belt includes holes arranged in pairs on the flexible belt transversely to the longitudinal direction of the flexible belt, and wherein L-shaped angle elements are arranged at each respective pair of holes. This solution means that a flange of the L-shaped angle elements "digs" into the surface of the ground and thus further improving traction.

In a variant of said solution with an L-shaped angle element, a traction device includes two flexible belts arranged parallel to each other, the two flexible belts being held together by L-shaped angle elements arranged transversely to the longitudinal direction of the flexible belts. Relatively narrow flexible belts may thus be used when a traction device having L-shaped angle elements adapted to fit relatively wide tires is needed.

Further features and advantages of the present disclosure will become apparent from the appended patent claims and accompanying description. A person skilled in the art will realize that various parts and/or components of the present disclosure may be combined in ways other than those described, to form embodiments that differ from those described hereinafter without departing from the scope of protection as defined by the patent claims.

### BRIEF DESCRIPTION OF THE FIGURES

The above-mentioned and additional details and advantages of the present disclosure will be more readily understood in the following description of exemplary embodiments of the present disclosure with reference to the figures, in which:
Figure 1 shows a traction device according to an embodiment of the present disclosure.
Figure 2 is a top view of a system according to an embodiment of the present disclosure.
Figure 3 is a top view of a system according to an embodiment of the present disclosure.
Figure 4 is a top view of another system according to one embodiment of the present disclosure.
Figure 5 is a side view of the system in Figure 4.
Figure 6 shows a traction device according to an embodiment of the present disclosure.
Figure 7 shows another embodiment of a traction device according to the present disclosure.

### DESCRIPTION OF EXAMPLES OF EMBODIMENTS ACCORDING TO THE INVENTION

The disclosure will now be described in more detail with reference to the accompanying figures, in which examples of embodiments are shown. However, the disclosure may be implanted in many different ways and should not be regarded as limited to the examples shown. Same reference numbers refer to the same or similar parts of the disclosure throughout the description.

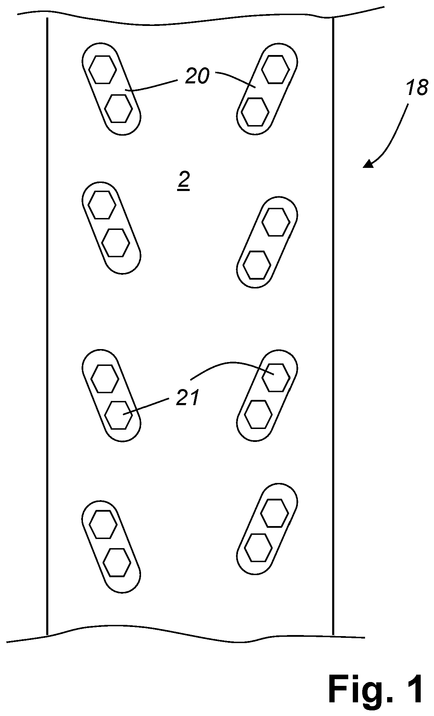

Referring to the embodiment shown in Figure 1, a portion of a traction device (18) is shown which includes a flexible belt (2) on which elongated washers are arranged with two bolts (21) and respective nuts (not shown) on the opposite side. Additionally, said washers (20) are arranged at an angle to the longitudinal direction of the flexible belt and in two parallel rows along the flexible belt (2) and also on both sides of the flexible belt (2).

The traction device, primarily intended for wheeled vehicles, includes an elongated flexible belt (2), wherein a plurality of holes is arranged in and along the flexible belt (2). A bolt (21) is arranged in each respective hole with the bolt head on one side of the flexible belt (2), and wherein the bolt (21) is secured to the flexible belt (2) by a nut on the opposite side of the flexible belt (2). A washer (20) is arranged on either side of the flexible belt (2) at each bolt (21) and nut. In the embodiment shown, the flexible belt (2) includes holes arranged in pairs on the flexible belt (2) and elongated washers (20) including two holes spaced to correspond with the pairs of holes in the flexible belt (2). Additionally, said washers (20) are arranged at an angle to the longitudinal direction of the flexible belt (2), for example, 10 to 80 degrees. The said holes or pairs of holes are arranged in two parallel rows along the flexible belt (2) with corresponding bolts (21), nuts and washers (20).

In the described example, the bolt (21) may be a traction forming part.

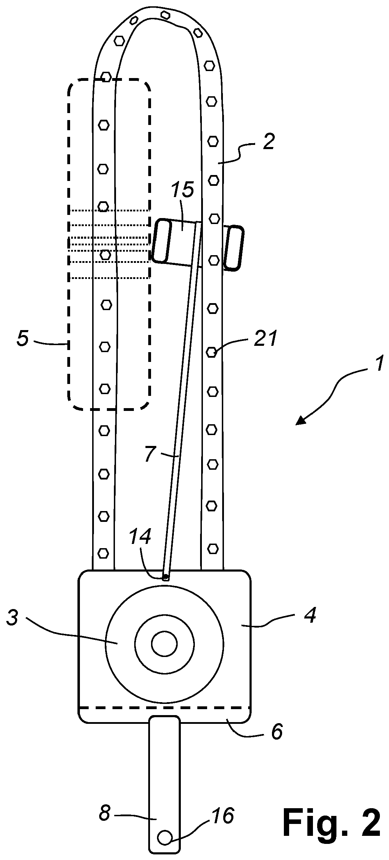

Figure 2 shows a system (1) for wheeled vehicles. The system comprises a traction device (18) arranged in an endless elongated loop and positioned around a guide element (3) in such a way that the loop reverses direction at the guide element (3). Guide element (3) is arranged on a glide element (4), which is configured to be pulled forward by a vehicle along the ground in front of one of the vehicle's wheels (5), such that one side of the loop of the traction device (18) is arranged to run under the wheel (5) and the other side of the loop is arranged to run alongside, such as at a side of, the wheel (5). The guide element (3) may be a guide wheel rotatably arranged on the glide element (4) in such a way that the traction device (18) runs around the guide wheel (3), so that the loop lies in a horizontal plane when using the system (1).

In use, the belt loop may be maintained in a substantially horizontal orientation, parallel to the ground surface, as it continuously advances under the wheel (5) and around the wheel (5) via the guide element (3)/guide wheel (3) to provide traction for the wheel (5).

In some examples, the flexible belt (2) is guided around a circumference of the guide wheel (3) which provides a rotation of the enless elongated loop, and wherein the loop formed by the flexible belt (2) is maintained in a substantially horizontal plane with respect to the ground surface during operation of the system (1). That the loop formed by the flexible belt (2) is maintained in a substantially horizontal plane with respect to the ground surface during operation of the system (1) may also include that an upper surface of the side of the loop of the traction device (18) arranged to run under the wheel, i also the upper surface of the other side of the loop that runs at a side of, or alongside , the wheel (5).

Additionally, the glide element (4) has an upwardly curved, or bent, front end (6).

A second guide element (7) is placed at the rear end of the glide element (4), configured to extend backward at least as far as to a point and/or position where the wheel is in contact with the ground and alongside, such as at a side of, the wheel when in use. The embodiment shown in Figure 1 may include a second guide element (7) which is pivotally arranged at the glide element (4) at a connection point (14). The second guide element (7) may, of course, also be fixed to the glide element (4). Figure 1 also shows a third guide element (15), which is arranged on the distal end of the second guide element (7). In the example shown, the third guide element (15) is U-shaped wherein the second guide element (7) is arranged at the bottom of the U-shape to form a passageway on either side of the second guide element (7) within the U-shape. The belt (2) runs in the U-shape on the side of the second guide element (7) which is furthest away, such as facing away, from the wheel (5). If the second guide element (7) is instead placed on the other side of the wheel (5), the traction device (18) is instead placed on the other side in the U-shape so that it runs in the passage which is then furthest away, such as facing away, from the wheel (5).

As shown in Figure 2, a forwardly directed elongated drawbar (8) is arranged at the front edge of the glide element (4), such that the drawbar (8) may have a forward-extending direction. A hole (16) in the drawbar (8) facilitates the attachment of a rope or strap that can be connected to the vehicle so that the system (1) can be pulled forward.

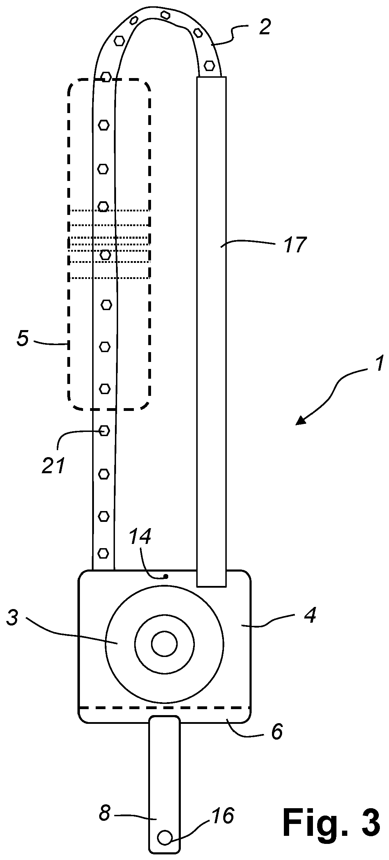

Figure 3 shows an alternative embodiment of the system (1). As in the previous embodiment, it is a system (1) for wheeled vehicles in slippery or low-traction road conditions. Guide element (3) is arranged on a glide element (4), which is configured to be pushed forward by a vehicle along the ground in front of one of the wheels (5) of the vehicle, such that one side of the loop (not shown) is arranged to run under the wheel (5), and the other side of the belt loop is arranged to run alongside, such as at one side of, the wheel (5). The guide element (3) may be a guide wheel rotatably arranged on the glide element (4) so that the traction device (18) runs around the guide wheel (3) so that the loop lies in a horizontal plane when using the system (1). For further description of the loop lies in a horizontal plane, see the description related to Figure 2.

Similarly to the embodiment in Figure 2, the glide element (4) has an upwardly curved, or bent, front end (6).

The system (1) of Figure 3 has a first guide runner (9) arranged at the rear end of the glide element (4), configured to extend backward at least as far as to a point and/or position where the wheel (5) is in contact with the ground and alongside, such as at the side of, the wheel (5). A bridge element (10) is arranged on the first guide runner (9) so as to connect the first guide runner (9) to a second guide runner (11) arranged in parallel with the first guide runner (9), and such that the second guide runner (11) extends backward at least as far as to the point and/or portion where the wheel (5) is in contact with the ground and on the opposite side of the wheel (5) relative to the first guide runner (9).

The bridge element (10) includes a wheel axle (12) arranged at the each of respective first and second guide runners (9, 11), transversely to the longitudinal direction of the guide runners, and wherein two wheels (13) may be rotatably arranged on the wheel axle (12). It could also be only one wheel (13) or more than two. Number of wheels depends on the design in terms of diameter, width, etc. in one example, no wheel is arranged on the wheel axle (12) and the wheel (5) is in contact with the axle.

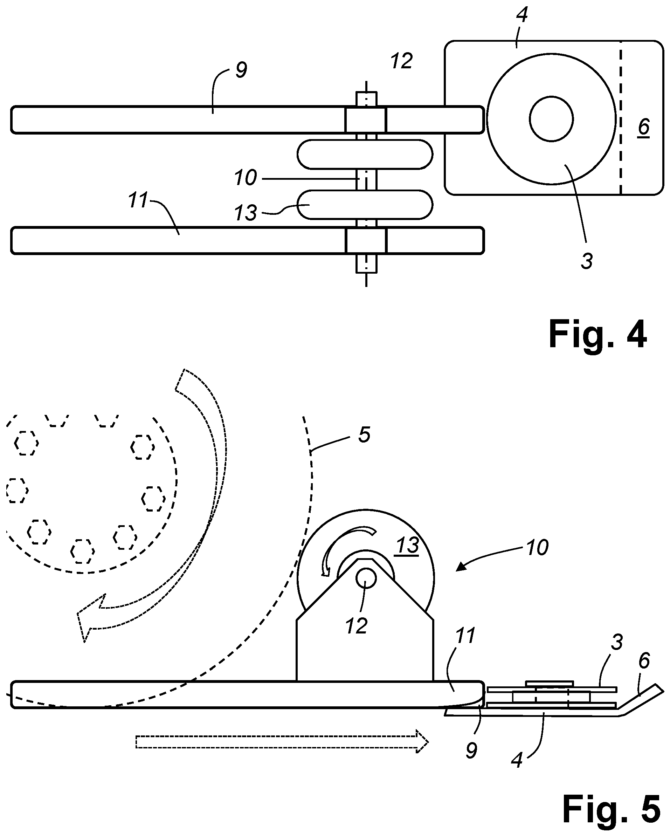

Figures 4 and 5 show the system (1) without a traction device. Figure 5 shows the principle of the system's propulsion. The wheel (5) of the vehicle is in contact with wheel (13) of the bridge element (10). In the examples without a wheel (13) on the wheel axle, the wheel (5) is in contact with the axle. The contact between the two wheels, or wheel (5) and the axle, has no effect other than to reduce the load on the bridge element (10). The system is pushed forward (to the right in Figure 5) and the glide element (4) slides on the ground, which may be covered with snow, for example. Since the wheel rolls on a portion of the traction device (18) while the system moves forward, the traction device (18) or loop rotates around the guide wheel (3). As shown in Figure 2, the belt may rotate clockwise; moving under the wheel (5), thereby providing traction against the ground with the help of the traction device (18), continuing backward, and then turn forward alongside, such as at the side of, the wheel (5) and, at the guide wheel (3), turn backward under the tire again. The rotation of the belt loop results from the fact that the wheel (5) and system (1) move forward at the same speed.

Figure 5 shows how the second guide runner (11) has an upward-facing front section with the same function as the upwardly-curved, or bent, front end (6) of the glide element (4).

Figure 3 shows an embodiment in which the system includes a return guard (17) in the form of a tube. When the traction device (18) moves in the direction of glide element (4), it runs inside this tube. This reduces, for example, the risk of something getting stuck, or caught, on the traction device (18).

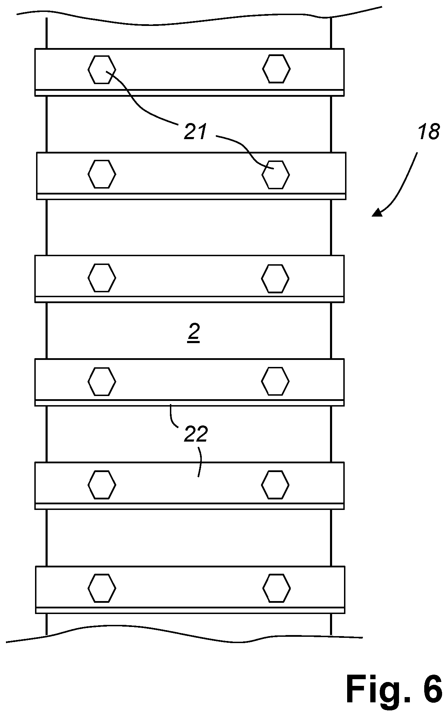

Figure 6 shows a traction device (18) in which the flexible belt (2) includes holes arranged in pairs on the flexible belt (2) transversely to the longitudinal direction, wherein L-shaped angle elements (22) are arranged at each respective pair of holes.

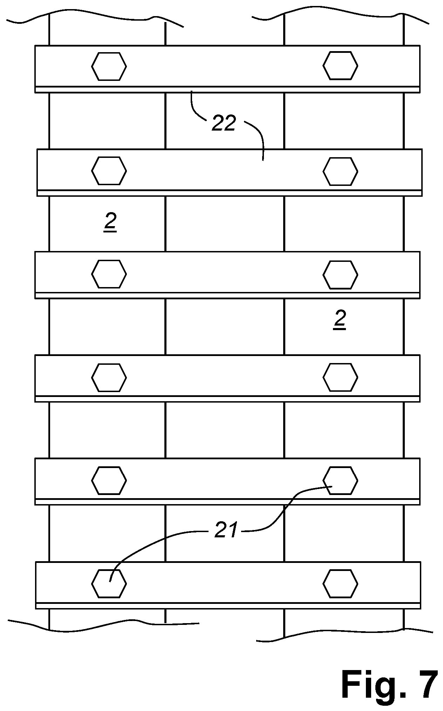

Figure 7 shows a system with a traction device (18) that includes two flexible belts (2) arranged parallel to each other, the two flexible belts (2) being held together by L-shaped angle elements (22) arranged transversely to the longitudinal direction of the flexible belts (2).

The present invention is not limited to the embodiments described above and shown in the figures. A person skilled in the art will realize that many variants and modifications are possible within the scope of protection defined by the subsequent patent claims. For example, the washers in the traction device with two rows do not need to be arranged in pairs . Instead, they may, for example, be arranged in a zigzag pattern or some other irregular pattern.

## Claims

1. A traction device (18) for a wheeled vehicles, wherein the traction device (18) comprises an elongated flexible belt (2),
**characterized by**
a plurality of holes arranged in and along the flexible belt (2), wherein a bolt (21) is arranged in each hole of the plurality of holes with a bolt head on one side of the flexible belt (2) and wherein the bolt (21) is fixed to the flexible belt (2) by a nut on the opposite side of the flexible belt (2), such that a traction is provided between a tire of the wheeled vehicle and a ground surface when in use.

2. The traction device (18) according to claim 1, wherein a washer (20) is arranged on each side of the flexible belt (2) at each bolt (21) and nut.

3. The traction device (18) according to claim 2, wherein the flexible belt (2) comprises holes arranged in pairs on the flexible belt (2) and elongated washers (20) comprising two holes arranged at a corresponding distance to the pairs of holes in the flexible belt (2).

4. The traction device (18) according to claim 3, wherein said washers (20) are arranged at an angle to the longitudinal direction of the flexible belt (2).

5. The traction device (18) according to any of the preceding claims, wherein the holes or pairs of holes are arranged in two parallel rows along the flexible belt (2).

6. The traction device (18) according to any of claims 1 to 5, wherein the flexible belt (2) comprises holes arranged in pairs on the flexible belt (2) transversely to the longitudinal direction, and wherein L-shaped angle elements (22) are arranged at the respective pairs of holes.

7. The traction device (18) according to claim 1 to 6, comprising the flexible belt (2) comprises two flexible belts (2) arranged parallel to each other, the two flexible belts (2) being held together by the L-shaped angle elements (22) arranged transversely to the longitudinal direction of the flexible belts (2).

8. The traction device (18) according to any of claims 1 to 7, wherein the bolt (21) is a traction forming part.

9. System (1) for wheeled vehicles, which system (1) comprises a traction device (18) according to one of the preceding claims, wherein the flexible belt (2) is arranged in an endless elongated loop arranged around a guide element (3) so that the loop reverses at the guide element (3), wherein the guide element (3) is arranged on a glide element (4) which is designed to be pulled or pushed forward by a vehicle along the ground in front of one of the vehicle's wheels (5) so that one side of the loop is arranged to run under the wheel (5) and the other side of the loop is arranged to run alongside the wheel (5).

10. The system (1) according to claim 9, wherein the guide element (3) is a guide wheel rotatably arranged on the glide element (4) such that the flexible belt (2) runs around the guide wheel (3) so that the loop lies in a horizontal plane when the system (1) is used.

11. The system (1) according to claim 10 wherein the flexible belt (2) is guided around a circumference of the guide wheel (3) which provides a rotation of the enless elongated loop, and wherein the loop formed by the flexible belt (2) is maintained in a substantially horizontal plane with respect to the ground surface during operation of the system (1).
